# EUROPÄISCHE PATENTSCHRIFT

(11) **EP 2 829 377 B1**
(45) Veröffentlichungstag und Bekanntmachung des Hinweises auf die Patenterteilung: **09.09.2015**
(21) Anmeldenummer: 13177553.8
(22) Anmeldetag: 23.07.2013
(51) Int. Cl.: B29C 44/44, B29C 44/56, E04B 1/74, B29K 25/00, E04B 1/90, E04B 1/76

(54) **Verfahren zur Herstellung eines Dämmelementes**
Method for manufacturing an insulating element
Procédé de fabrication d'un élément isolant

(43) Veröffentlichungstag der Anmeldung: 28.01.2015
(73) Patentinhaber: STO SE & Co. KGaA, 79780 Stühlingen (DE)
(72) Erfinder: Engelniederhammer, Peter, 89426 Wittislingen (DE); Köhnlein, Jochen, 86753 Möttingen (DE)
(74) Vertreter: Gottschalk, Matthias

(56) Entgegenhaltungen:
- EP-A1- 0 641 635
- EP-A1- 0 792 732
- EP-A1- 2 589 477
- EP-A2- 1 354 685
- GB-A- 1 176 238
- US-A- 4 424 180
- US-A- 4 510 268
- US-A- 5 114 656

## Beschreibung

Die Erfindung betrifft ein Verfahren zur Herstellung eines Dämmelementes zur Schall- und/oder Wärmedämmung eines Gebäudes mit den Merkmalen des Oberbegriffs des Anspruchs 1. Bei dem Verfahren werden vorgeschäumte Polystyrol-Partikel in einer Form unter Druck und/oder Zugabe von Wärme zu einem Formteil versintert.

### Stand der Technik

Nach einem derartigen Verfahren hergestellte Dämmelemente sind auch als Polystyrol-Hartschaumelemente bzw. Polystyrol-Hartschaumplatten bekannt. Sie finden im Baubereich insbesondere zur Ausbildung von Schall- und/oder Wärmedämmschichten Einsatz, beispielsweise zur Schall- und/oder Wärmedämmung einer Gebäudeaußenwand. Es sind Polystyrol-Hartschaumelemente aus expandiertem Polystyrol (EPS) oder aus extrudiertem Polystyrol (XPS) bekannt, wobei im Bereich der Fassadendämmung überwiegend Dämmelemente aus expandiertem Polystyrol (EPS) eingesetzt werden.

Zur Ausbildung eines Wärmedämmverbundsystems werden häufig ein- oder mehrlagige Putzschichten auf eine Schall- und/oder Wärmedämmschicht aus Polystyrol-Hartschaumplatten aufgebracht. Sie sollen eine fugenlose, optisch ansprechende außenliegende Deckschicht bilden. Um dies zu gewährleisten, werden an die Dämmelemente aus Polystyrol-Hartschaum hohe Anforderungen hinsichtlich Formstabilität und Maßhaltigkeit gestellt. Denn Formveränderungen und ein dem Material üblicherweise innewohnendes Quell- und/oder Schwindverhalten können zu Spannungen in der außen aufgebrachten Putzschicht und damit zu Fugenabzeichnungen und/oder zu Rissbildungen führen. Eine optisch ansprechende Deckschicht ist dann nicht mehr gewährleistet. Ferner können Risse dazu führen, dass die Deckschicht nicht witterungsbeständig ist und Feuchtigkeit in die dahinterliegende Dämmschicht eindringt.

Das dem Material innewohnende Quell- und/oder Schwindverhalten ist insbesondere auf die Art der Herstellung der Dämmelemente zurückzuführen. Denn bei der Herstellung von Polystyrol-Hartschaum werden die Ausgangsstoffe in der Regel unter Druck und/oder Zugabe von Wärme versintert bzw. verschmolzen. Die Wärme wird beispielsweise mittels Wasserdampf zugeführt, der durch eine Form geleitet wird, in der schäumbare oder vorgeschäumte Polystyrol-Partikel enthalten sind. Der Wasserdampf bewirkt, dass die schäumbaren oder vorgeschäumten Partikel (weiter) aufschäumen und miteinander verschmelzen. Ein derart hergestelltes Formteil kann auch lange nach dem Abkühlen auf Raumtemperatur noch innere Spannungen aufweisen, die dann zum Quellen oder Schwinden des Formteils führen.

Um das Quell- und/oder Schwindverhalten auf ein Minimum zu reduzieren, ist es daher üblich, die Formteile nach dem Entformen erst einmal eine Zeit lang zu lagern. In dieser Zeit "reifen" die Formteile und es werden innere Spannungen abgebaut. Die Reifezeit kann dabei mehrere Wochen betragen, so dass es ausreichend große Lagerflächen vorzuhalten gilt, wenn der Herstellungsprozess nicht unterbrochen werden soll. Aus prozessökonomischen Gründen besteht daher Optimierungsbedarf.

Aus der DE 10 2010 054 216 A1 ist ein Verfahren zur Formstabilisierung von EPS-Dämmplatten aus Blockformen bekannt, das eine Verkürzung der Lager- bzw. Reifezeit solcher Dämmplatten ermöglichen soll. Das Verfahren sieht nach dem Aufschäumen bzw. Versintern der Polystyrol-Partikel in einer Blockform und nach einer mehrtägigen Zwischenlagerung ein kurzzeitiges Zusammenpressen des Formteils in einer Richtung mittels einer Presseinrichtung sowie eine sich daran anschließende erneute mehrtägige Zwischenlagerung vor. Danach wird das Formteil mit trockenem Wasserdampf oder Heißluft beaufschlagt, um einen Überdruck auf einer ersten Seite und einen Unterdruck auf einer der ersten Seite gegenüberliegenden Seite des Formteils zu erzeugen, wobei der Unterdruck das Absaugen überschüssigen Treibmittels ermöglichen soll. Derart hergestellte Dämmplatten sollen bei verkürzter Lagerzeit eine hohe Formstabilität und Maßhaltigkeit aufweisen.

Aus der US 4 510 268 A ist ferner ein Verfahren zur Elastifizierung eines geschlossenzelligen Kunststoffschaums bekannt, bei dem der Schaumkörper in zwei orthogonal zueinander liegende Richtungen gestaucht wird. Die Stauchung in zwei Richtungen soll insbesondere ein Biegen des Schaumköpers erleichtern, um hieraus eine Dämmung für einen runden Flüssiggastank zu formen.

Darüber hinaus geht aus der US 5 114 656 A ein Verfahren zur Elastifizierung eines Polystyrolpartikelschaumkörpers für Verpackungen hervor, bei dem eine Stauchung des Schaumkörpers in drei orthogonal zueinander liegende Richtungen vorgenommen werden kann.

Ausgehend von dem vorstehend genannten Stand der Technik liegt der vorliegenden Erfindung die Aufgabe zugrunde, ein Verfahren zur Herstellung eines Dämmelementes mit verbesserter Formstabilität und Maßhaltigkeit anzugeben, das besonders einfach und kostengünstig durchzuführen ist. Insbesondere soll das Verfahren die Lager- bzw. Reifezeit derartiger Dämmelement entweder deutlich verkürzen oder gänzlich entbehrlich machen.

Zur Lösung der Aufgabe wird das Verfahren mit den Merkmalen des Anspruchs 1 vorgeschlagen. Vorteilhafte Weiterbildungen der Erfindung sind den Unteransprüchen zu entnehmen.

### Offenbarung der Erfindung

Bei dem vorgeschlagenen Verfahren zur Herstellung eines Dämmelementes zur Schall- und/oder Wärmedämmung eines Gebäudes werden vorgeschäumte Polystyrol-Partikel in einer Form unter Druck und/oder Zugabe von Wärme zu einem Formteil versintert. Das derart hergestellte Formteil wird in wenigstens zwei Richtungen, vorzugsweise in wenigstens zwei orthogonal zueinander liegenden Richtungen, gestaucht, wobei das Formteil zunächst in eine erste Richtung und anschließend in eine weitere Richtung gestaucht wird. Erfindungsgemäß wird der Stauchungsgrad in den unterschiedlichen Stauchungsrichtungen variiert.

Die Stauchung in wenigstens zwei, vorzugsweise orthogonal zueinander liegenden Richtungen besitzt den Vorteil, dass sich die Wirkungen der Stauchungen, insbesondere in Bezug auf eine mit einer Stauchung einhergehende Komprimierung, zum Teil aufheben und sich auf diese Weise eine hohe Maßhaltigkeit erzielen lässt. Das Ergebnis der Stauchung ist auf diese Weise beeinflussbar bzw. steuerbar. Einfluss kann insbesondere über die Dauer einer Stauchung und/oder den jeweiligen Stauchungsgrad genommen werden.

Die mit einer Stauchung einhergehende Komprimierung führt nach Wegnahme der zur Stauchung eingesetzten Presskraft zu einer Rückstellung und damit Entspannung des Formteils. Die Rückstellung bzw. Entspannung des Formteils kann beschleunigt werden, wenn nach der ersten Stauchung in eine erste Richtung wenigstens eine weitere Stauchung in eine weitere Richtung durchgeführt wird. Dies wiederum hat zur Folge, dass innere Spannungen schnell abgebaut werden und das Formteil - ohne Einhaltung einer langen Reifezeit - als Dämmelement einsetzbar ist. Damit entfällt die Notwendigkeit, große Lagerflächen zum Reifen bzw. Ablagern derartiger Dämmelemente vorzuhalten. Die Herstellung derartiger Dämmelemente kann auf diese Weise einfacher und kostengünstiger gestaltet werden.

Wie eingangs bereits erwähnt sind in eine Richtung gestauchte Polystyrol-Hartschaumplatten grundsätzlich bekannt. Im Unterschied zur technischen Lehre der eingangs erwähnten Druckschrift wird die Stauchung, auch Elastifizierung genannt, im Stand der Technik vorrangig zur Verbesserung der Schalldämmeigenschaften einer Dämmplatte aus Polystyrol-Hartschaum eingesetzt. Hierzu wird die Dämmplatte in der Regel senkrecht zur Plattenebene gestaucht. Die sich an die Stauchung anschließende Rückstellung der Dämmplatte kann sich über einen derart langen Zeitraum erstrecken, dass sie ggf. erst nach Anbringung der Dämmplatte an einer Gebäudefassade zum Abschluss kommt. Dies kann zur Folge haben, dass sich die Dämmplatte auf der Oberfläche einer außen aufgebrachten Putzschicht abzeichnet (so genannter "Kisseneffekt"). Dies gilt es zu vermeiden.

Entsprechendes gilt bei einer eindimensionalen Stauchung einer Dämmplatte aus Polystyrol-Hartschaum, wenn sie parallel zur Plattenebene erfolgt. Die Maßhaltigkeit ist dann in einer Richtung parallel zur Plattenebene nicht gewährleistet.

Die vorliegend vorgeschlagene Stauchung in wenigstens zwei, vorzugsweise orthogonal zueinander liegende Richtungen, d. h. die mehrdimensionale Stauchung, ermöglicht im Unterschied zur eindimensionalen Stauchung eine Steuerung der Stauchungswirkungen, da sich diese gegenseitig beeinflussen. Die Steuerung erfolgt vorzugsweise über die Dauer einer Stauchung und/oder den Stauchungsgrad. Die Steuerung hat wiederum zur Folge, dass die anschließende Rückstellung kontrolliert erfolgt.

Vorteilhafterweise wird das Formteil in drei Richtungen, vorzugsweise in drei orthogonal zueinander liegenden Richtungen, gestaucht. Über die dreidimensionale Stauchung kann eine hohe Maßhaltigkeit des Dämmelements in Bezug auf alle drei Raumrichtungen bewirkt werden.

Des Weiteren wird vorgeschlagen, dass das Formteil in wenigstens zwei Richtungen parallel zu zwei sich schneidenden Seitenkanten des Formteils gestaucht wird. Unter Seitenkanten werden die Seitenflächen begrenzenden Kanten eines platten- oder blockförmigen Dämmelementes verstanden. Da diese in der Regel orthogonal zueinander liegen, trifft dies auch auf die parallel hierzu liegenden Richtungen der Stauchungen zu. Sofern in drei Richtungen gestaucht wird, liegen die Richtungen vorzugsweise parallel zu drei sich schneidenden Seitenkanten des Formteils.

Das Formteil wird erst gestaucht, wenn es zumindest teilweise abgekühlt und/oder entspannt ist. Dies gilt wenn das Versintern unter Druck und/oder Zugabe von Wärme erfolgt. Dabei kann das Stauchen in der Form selbst oder nach der Entnahme des Formteils aus der Form durchgeführt werden.

Des Weiteren wird das Formteil aus der Form entnommen und in einer Pressvorrichtung gestaucht. Bei der Pressvorrichtung kann es sich beispielsweise um eine solche handeln, die bereits heute zur Elastifizierung von Dämmelementen aus Polystyrol-Hartschaum eingesetzt wird. Auf diese Weise können zur Durchführung des Verfahrens bereits vorhandene Anlagen eingesetzt werden. Der anlagentechnische Aufwand ist somit gering.

Dies gilt im Besonderen, wenn die Stauchungen in unterschiedliche Richtungen zeitlich versetzt durchgeführt werden. Um eine bereits vorhandene Pressvorrichtung einsetzen zu können, mittels welcher eine Stauchung in nur eine Richtung bewirkbar ist, muss lediglich die Position des zu stauchenden Formteils nach jedem Stauchvorgang geändert werden. Beispielsweise kann das Formteil um 90° gedreht werden, um eine Stauchung in eine Richtung zu bewirken, die orthogonal zur Richtung einer vorangegangenen Stauchung liegt.

Vorteilhafterweise läuft der gesamte Prozess automatisiert ab. Dies schließt vorzugsweise die Entnahme des Formteils aus der Form und die Übergabe an eine Pressvorrichtung mit ein, sofern der Verfahrensschritt des Stauchens nicht bereits in der Form durchgeführt wird.

Des Weiteren wird vorgeschlagen, dass das Formteil in eine Richtung um 2 bis 20%, vorzugsweise um 3 bis 15 %, weiterhin vorzugsweise um 4 bis 10 % bezogen auf die ursprüngliche Abmessung gestaucht wird. Wie Versuche belegen, wird bei einem entsprechenden Stauchungsgrad eine besonders hohe Maßhaltigkeit des Dämmelementes erreicht, da dieses weder zum Quellen noch zum Schwinden neigt.

Grundsätzlich ist es möglich, den Stauchungsgrad in den unterschiedlichen Stauchungsrichtungen zu variieren. Dies kann insbesondere dann von Vorteil sein, wenn das zu stauchende Formteil in einer ersten Stauchungsrichtung eine Abmessung besitzt, die sich von der Abmessung in einer weiteren Stauchungsrichtung deutlich unterscheidet. Der Stauchungsgrad ist dabei von der aufgebrachten Presskraft und/oder der Pressdauer abhängig. Diese sind derart zu wählen, dass der gewünschte Stauchungsgrad erreicht wird. Der Stauchungsgrad lässt sich in einfacher Weise durch Vergleichen der Formteilabmessungen vor und während dem Stauchen ermitteln. Beispielsweise kann eine Platte mit einer Längenabmessung von 1 m um 0,1 m auf 0,9 m gestaucht werden. Der Stauchungsgrad beträgt in diesem Fall 10%.

In Weiterbildung der Erfindung wird vorgeschlagen, dass das Formteil bei einer Kerntemperatur von 20°C bis 60°C, vorzugsweise von 20°C bis 50°C, weiterhin vorzugsweise von 20°C bis 40°C gestaucht wird. Unter diesen Bedingungen lässt sich der Stauchvorgang optimal steuern.

Wie bereits erwähnt, kann das mehrdimensionale Stauchen in einem Arbeitsschritt erfolgen oder in mehrere Stauchvorgänge aufgeteilt werden, die zeitlich versetzt ausgeführt werden. Um die Steuerbarkeit des Vorgangs zu optimieren, wird das Formteil zunächst in eine erste Richtung und anschließend in eine weitere Richtung gestaucht. Auf diese Weise kann die nachfolgende Stauchung gezielt zur Beeinflussung der Wirkungen der vorangegangenen Stauchung eingesetzt werden.

Des Weiteren wird das Formteil in einem weiteren Verfahrensschritt in plattenförmige Dämmelemente aufgeschnitten. Vorzugsweise wird dabei eine Schnittebene parallel zu einer Stauchungsrichtung gelegt. Dies setzt voraus, dass die Stauchung vor dem Aufschneiden am Block vorgenommen wurde.

Alternativ ist es möglich, ein blockförmiges Dämmelement erst in mehrere plattenförmige Dämmelemente aufzuschneiden und dann die Stauchung an den plattenförmigen Dämmelementen vorzunehmen.

Wird zur Herstellung des Dämmelementes ein Formteilautomat verwendet, entfällt der Verfahrensschritt des Aufschneidens. Denn der Formteilautomat produziert auf Maß gefertigte Elemente, insbesondere Platten.

Alternativ zum Formteilautomaten kann aber auch eine Blockform zur Herstellung des Formteils verwendet werden. Das in der Blockform hergestellte blockförmige Dämmelement wird dann vorzugsweise in einem weiteren Verfahrensschritt in plattenförmige Dämmelemente aufgeschnitten. Die Stauchung des Dämmelements in wenigstens zwei Richtungen kann dann vor oder nach dem Aufschneiden erfolgen. D. h., dass die Reihenfolge der Verfahrensschritte Stauchen und Aufschneiden frei wählbar ist.

Das Stauchen kann zudem vor der Entnahme des Formteils aus der Form erfolgen, d. h. in der Form. Vorzugsweise wird das Stauchen erst vorgenommen, wenn das Formteil weitgehend abgekühlt und/oder entspannt ist. Das Stauchen in der Form macht eine separate Pressvorrichtung entbehrlich, erfordert jedoch einen anlagentechnischen Mehraufwand, da herkömmliche Anlagen zur Herstellung von Dämmelementen aus Polystyrol-Hartschaum hierzu nicht ausgelegt sind.

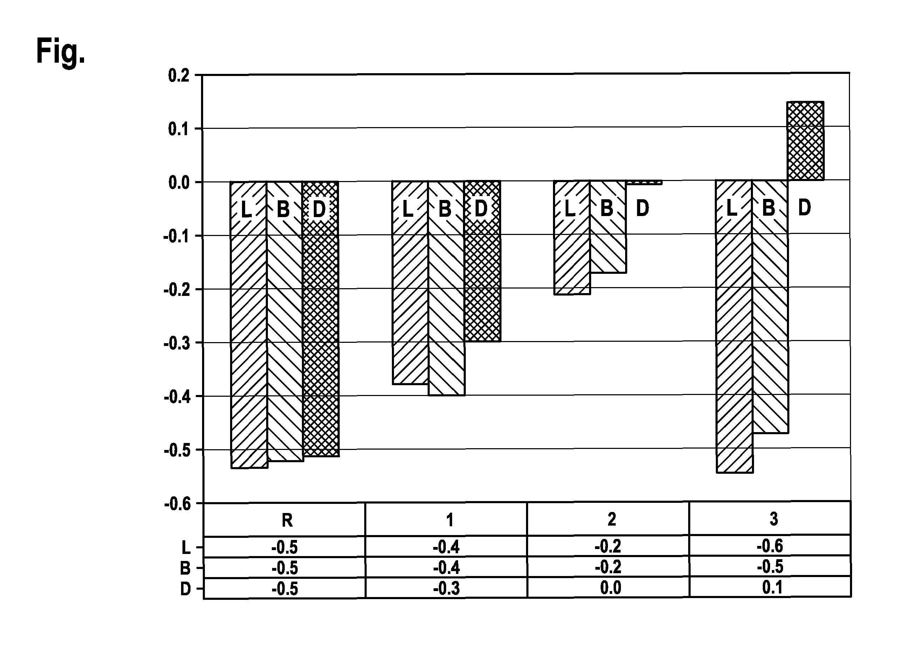

Das erfindungsgemäße Verfahren und seine Vorteile werden nachfolgend anhand der beigefügten Figur näher erläutert. Diese zeigt in Form eines Diagramms den Einfluss der Stauchung auf das Quell- und/oder Schwindverhalten von Dämmelementen aus Polystyrol-Hartschaum. Hierzu wurden Versuchsplatten aus Polystyrol-Hartschaum hergestellt, die sich lediglich darin unterschieden, dass sie
- nicht,
- in eine Richtung (Dickenrichtung) oder
- in drei Richtungen (Längen-, Breiten- und Dickenrichtung)
gestaucht wurden.

Zunächst wurden mehrere Platten aus expandiertem Polystyrol (EPS) hergestellt. Zur Herstellung der Platten wurde jeweils eine Laborform mit den Abmessungen 30 cm x 30 cm x 10 cm verwendet, wie sie zum Schäumen von EPS-Prüfkörpern üblich ist. In die Form wurden jeweils 9 Liter vorgeschäumtes Polystyrolgranulat mit einer mittleren Korngröße von 3-8 mm und einer Schüttdichte von 0,015-0,016 g/cm³ gegeben und mittels Wasserdampf bei einem Druck von 1 bar und einer Temperatur von 100°C zu einem Formteil verschweißt. Die Form wurde hierzu über im Deckel und Boden befindliche Schlitze 10-15 Sekunden lang mit Wasserdampf von oben nach unten durchströmt.

Nach erfolgtem Druckabbau wurde entformt und die Versuchsplatten 1, 2 und 3 unmittelbar einer Stauchung zugeführt. Die Stauchung wurde mittels einer handelsüblichen hydraulischen Werkstattpresse vorgenommen. Hierbei wurde der Stauchungsgrad variiert.

Die erste Platte 1 wurde jeweils in Längen- und Breitenrichtung um 3% und in Dickenrichtung um 8% gestaucht.

Die zweite Platte 2 wurde jeweils in Längen- und Breitenrichtung um 5% und in Dickenrichtung um 8% gestaucht.

Die dritte Platte 3 wurde lediglich in Dickenrichtung um 8% gestaucht.

Eine weitere als Referenz dienende Platte R wurde keiner Stauchung unterzogen.

Mittels Schiebelehren wurden die Längen, Breiten und Dicken der vier Platten erfasst. Anschließend wurden die vier Platten 48 Stunden lang bei einer Temperatur von 70°C gelagert. Danach ließ man die Platten auf Umgebungstemperatur abkühlen bevor eine erneute Vermessung vorgenommen und die prozentuale Abweichung von den zuvor gemessenen Werten errechnet wurde. Die Abweichungen wurden dann in Form eines Diagramms dargestellt (siehe Figur).

Wie dem Diagramm zu entnehmen ist, weist die Referenzplatte R in allen drei Richtungen (Länge L, Breite B und Dicke D) ein deutliches Schwundverhalten auf. Die Maßänderungen bzw. -abweichungen nach einer Lagerung bei 70°C über 48 Stunden liegen über 0,5%.

Die Platte 1, die in Längen- und Breitenrichtung 3% und in Dickenrichtung 8% gestaucht wurde, wies bereits ein deutlich reduziertes Schwindverhalten auf. Denn die Abweichung betrug weniger als 0,4%.

Noch deutlicher kommt dieser Effekt bei der Platte 2 zum Vorschein, die in Längen- und Breitenrichtung 5% und in Dickenrichtung 8% gestaucht wurde. Hier konnten die Abweichungen auf etwa 0,2% in Längen- und Breitenrichtung und auf fast 0% in Dickenrichtung minimiert werden.

Der Vorteil einer mehrdimensionalen Stauchung gegenüber einer eindimensionalen Stauchung wird bei Verglich der Werte der Platten 1 und 2 mit den Werten der Platte 3 deutlich, die lediglich in Dickenrichtung um 8% gestaucht wurde. In Längen- und Breitenrichtung weist die eindimensional gestauchte Platte 3 ein Schwindverhalten auf, das in etwa dem der ungestauchten Platte R entspricht. In Dickenrichtung dagegen zeigt die Platte 3 ein Quellverhalten von über 0,1 %.

Gleichwohl die Platten 1 und 2 in Dickenrichtung ebenfalls um 8% gestaucht wurden, zeigen diese kein Quellverhalten. Dies ist darauf zurückzuführen, dass die zusätzlichen Stauchungen in Längen- und Breitenrichtung die Wirkung der Stauchung in Dickenrichtung beeinflussen. In Abhängigkeit vom Stauchungsgrad lässt sich das Schwindverhalten derart steuern, dass die Abweichung minimal ist (siehe Platte 2).

In einem zweiten Versuch bei gleicher Versuchsanordnung konnten die Ergebnisse reproduziert werden, so dass der Beweis gegeben ist, dass das Quell- und Schwindverhalten über die Stauchung in vorhersehbarer Weise steuerbar ist.

## Patentansprüche

1. Verfahren zur Herstellung eines Dämmelementes zur Schall- und/oder Wärmedämmung eines Gebäudes, bei dem vorgeschäumte Polystyrol-Partikel in einer Form unter Druck und/oder Zugabe von Wärme zu einem Formteil versintert werden und das Formteil in wenigstens zwei Richtungen, vorzugsweise in wenigstens zwei orthogonal zueinander liegenden Richtungen, gestaucht wird, wobei das Formteil zunächst in eine erste Richtung und anschließend in eine weitere Richtung gestaucht wird,
**dadurch gekennzeichnet, dass** der Stauchungsgrad in den unterschiedlichen Stauchungsrichtungen variiert wird.

2. Verfahren nach Anspruch 1,
**dadurch gekennzeichnet, dass** das Formteil in drei Richtungen, vorzugsweise in drei orthogonal zueinander liegenden Richtungen, gestaucht wird.

3. Verfahren nach Anspruch 1 oder 2,
**dadurch gekennzeichnet, dass** das Formteil in wenigstens zwei Richtungen parallel zu zwei sich schneidenden Seitenkanten des Formteils gestaucht wird.

4. Verfahren nach einem der vorhergehenden Ansprüche,
**dadurch gekennzeichnet, dass** das Formteil nach zumindest teilweisem Abkühlen und/oder Entspannen aus der Form entnommen und in einer Pressvorrichtung gestaucht wird.

5. Verfahren nach einem der vorhergehenden Ansprüche,
**dadurch gekennzeichnet, dass** das Formteil in eine Richtung um 2 bis 20%, vorzugsweise um 3 bis 15%, weiterhin vorzugsweise um 4 bis 10% bezogen auf die ursprüngliche Abmessung gestaucht wird.

6. Verfahren nach einem der vorhergehenden Ansprüche,
**dadurch gekennzeichnet, dass** das Formteil bei einer Kerntemperatur von 20°C bis 60°C, vorzugsweise von 20°C bis 50°C, weiterhin vorzugsweise von 20°C bis 40°C, gestaucht wird.

7. Verfahren nach einem der vorhergehenden Ansprüche,
**dadurch gekennzeichnet, dass** das Formteil in plattenförmige Dämmelemente aufgeschnitten wird, wobei vorzugsweise eine Schnittebene parallel zu einer Stauchungsrichtung gelegt wird.

8. Verfahren nach einem der vorhergehenden Ansprüche,
**dadurch gekennzeichnet, dass** ein Formteilautomat oder eine Blockform zur Herstellung des Formteils verwendet wird.

## Claims

1. A method of producing an insulating member for sound and/or heat insulation in a building, in which prefoamed polystyrene particles are sintered in a mould under pressure and/or with heat into a moulded part and the moulded part is compressed in at least two directions, preferably in at least two directions lying at right angles to one another, wherein the moulded part is initially compressed in a first direction and then in a further direction,
**characterized in that** the degree of compression in the different compression directions is varied.

2. The method according to claim 1,
**characterized in that** the moulded part is compressed in three directions, preferably in three directions lying at right angles to one another.

3. The method according to claim 1 or 2,
**characterized in that** the moulded part is compressed in at least two directions parallel to two intersecting side edges of the moulded part.

4. The method according to one of the preceding claims,
**characterized in that** the moulded part is removed from the mould following at least partial cooling and/or relaxing and compressed in a pressing device.

5. The method according to one of the preceding claims,
**characterized in that** the moulded part is compressed in one direction by 2 to 20 %, preferably by 3 to 15 %, further preferably by 4 to 10 %, relative to the original dimension.

6. The method according to one of the preceding claims,
**characterized in that** the moulded part is compressed at a core temperature of 20 °C to 60 °C, preferably of 20 °C to 50 °C, further preferably of 20 °C to 40 °C.

7. The method according to one of the preceding claims,
**characterized in that** the moulded part is cut into panel-shaped insulating members, wherein a cutting plane is preferably laid parallel to a compression direction.

8. The method according to one of the preceding claims,
**characterized in that** a moulding machine or a block mould is used to produce the moulded part.

## Revendications

1. Procédé destiné à fabriquer un élément isolant, pour l'isolation phonique et/ou le calorifugeage d'un bâtiment, lors duquel on fritte des particules de polystyrène prémoussé dans un moule sous pression et/ou en ajoutant de la chaleur en une pièce moulée et on refoule la pièce moulée dans au moins deux directions, de préférence dans au moins deux directions orthogonales l'une par rapport à l'autre, la pièce moulée étant d'abord refoulée dans une première direction et ensuite dans une autre direction,
**caractérisé en ce qu'**on fait varier le degré de refoulement dans les différentes directions de refoulement.

2. Procédé selon la revendication 1,
**caractérisé en ce qu'**on refoule la pièce moulée dans trois directions, de préférence dans trois directions orthogonales l'une par rapport à l'autre.

3. Procédé selon la revendication 1 ou la revendication 2,
**caractérisé en ce qu'**on refoule la pièce moulée dans au moins deux directions parallèles à deux arêtes latérales qui se recoupent de la pièce moulée.

4. Procédé selon l'une quelconque des revendications précédentes, **caractérisé en ce qu'**on retire la pièce moulée du moule après refroidissement et/ou détente au moins partiel(le) et on la refoule dans un dispositif de compression.

5. Procédé selon l'une quelconque des revendications précédentes, **caractérisé en ce qu'**on refoule la pièce moulée de 2 à 20 % de préférence de 3 à 15 %, encore de préférence de 4 à 10 % dans une direction, en rapport de la dimension initiale.

6. Procédé selon l'une quelconque des revendications précédentes, **caractérisé en ce qu'**on moule la pièce moulée à une température à coeur de 20°C à 60°C, de préférence de 20°C à 50°C, encore de préférence de 20°C à 40°C.

7. Procédé selon l'une quelconque des revendications précédentes, **caractérisé en ce qu'**on découpe la pièce moulée en éléments de calorifugeage en forme de panneaux, alors qu'on pose de préférence un plan de coupe à la parallèle d'une direction de refoulement.

8. Procédé selon l'une quelconque des revendications précédentes, **caractérisé en ce qu'**on utilise machine de moulage ou un moule en forme de bloc pour la fabrication de la pièce moulée.
